# FASCICULE DE BREVET EUROPEEN

(11) **EP 0 340 130 B1**
(45) Date de publication et mention de la délivrance du brevet: **20.07.1994**
(21) Numéro de dépôt: 89420158.1
(22) Date de dépôt: 27.04.1989
(51) Int. Cl.: A01D 46/00, B60P 1/38

(54) **Bac de réception et d'évacuation pour le raisin de vendange**
Behälter zum Auffangen und Entleeren von Trauben
Container for receiving and evacuating grapes

(30) Priorité: 27.04.1988 FR 8806068
(43) Date de publication de la demande: 02.11.1989
(73) Titulaire: ETABLISSEMENTS VAUCHER - BEGUET (Société Anonyme de droit français), F-01400 Sulignat (FR)
(72) Inventeur: Vaucher, Gérard, F-01400 Chatillon Sur Chalaronne (FR); Beguet, René, F-01400 Chatillon Sur Chalaronne (FR)
(74) Mandataire: Maureau, Philippe

(56) Documents cités:
- EP-A- 0 014 153
- EP-A- 0 234 701
- FR-A- 1 157 952
- GB-A- 687 890
- US-A- 3 370 695
- US-A- 3 565 288
- US-A- 3 587 931
- US-A- 3 888 366

## Description

La présente invention a pour objet un bac de réception et d'évacuation pour le raisin de vendange, ce bac pouvant être intégré à une remorque ordinaire ou élévatrice, un camion, un conquet de réception dans le chai, etc.. Un bac de réception et d'évacuation pour le raisin de vendange possède généralement un fond équipé d'un dispositif d'évacuation constitué par une vis sans fin disposée longitudinalement. Lorque le bac équipe une remorque, l'entraînement de la vis sans fin peut être réalisé à l'aide de la prise de force du véhicule tracteur. Ce dispositif d'évacuation de la vendange a pour inconvénient de provoquer un écrasement important des grappes de raisin. Or, il est important, pour améliorer la fabrication du vin, ainsi que pour satisfaire aux normes dans certaines régions de production de vin d'appellation contrôlée, de ne pas écraser la vendange totalement ou partiellement avant vinification.

Cette solution présente également d'autres inconvénients, tels que difficulté du réglage des débits de vendange évacuée, risque de formation d'une voûte de vendange au-dessus de la vis, et détérioration de la vendange sous l'effet des gaz d'échappement du véhicule tracteur. Enfin, les vis sans fin sont des dispositifs dangereux pour les opérateurs, malgré les systèmes de sécurité, qui leur sont associés.

Le document FR-A-1 157 952 décrit un appareil pour le transfert de marc de raisin ou de vendange fraiche comprenant un couloir dans le fond duquel est monté un transporteur tel qu'une chaîne à palettes ou une bande sans fin.

La présente invention vise à remédier a ces inconvénients en fournissant un bac de réception et d'évacuation de raisin de vendange permettant d'obtenir une bonne qualité oenologique en sauvegardant les grappes de tout écrasement, détérioration ou oxydation, d'installation et de manoeuvre simples et rapides, autonome et d'une grande sécurité d'utilisation pour les opérateurs.

A cet effet, le bac qu'elle concerne, du type comportant un dispositif d'évacuation du raisin placé dans le fond de ce bac, constitué par un tapis sans fin disposé longitudinalement au-dessus du fond du bac, parallèlement à celui-ci et dont les tambours de guidage possèdent des axes horizontaux, est caractérisé en ce que le bac se présente sous la forme d'une trémie allongée, en ce que le tapis est équipé sur sa face extérieure de taquets transversaux régulièrement répartis, et en ce que le fond du bac est équipé en-dessous du tapis sans fin d'une grille formant un fond filtrant, la grille retenant les grappes ayant pu passer le long du transporteur, tout en permettant l'écoulement du jus, dont la récupération est réalisée à l'aide d'une vanne obturant un orifice débouchant dans le fond du bac.

Avantageusement, l'entraînement du tapis sans fin est assuré par un moteur électrique associé à un réducteur et un variateur de vitesse. La mise en oeuvre d'un tapis sans fin préserve le raisin de toutes brutalités au cours de la manoeuvre d'évacuation. Le raisin est d'autant mieux préservé que le tapis est entraîné à la vitesse la mieux adaptée au travail à effectuer, selon que l'évacuation est faite vers un égrappoir, une cuve de stockage pour fermentation, un pressoir, une table de tri, etc... L'utilisation d'un tapis sans fin en combinaison avec l'inclinaison des parois longitudinales de la cuve permet d'éviter l'effet de voûte, qui se produit inévitablement avec les vis sans fin connues. Le fait de disposer d'un moteur électrique rend également le dispositif autonome, dans la mesure où le bac comporte des accumulateurs d'énergie électrique, ce qui représente un avantage par rapport au cas où l'entraînement est assuré, à partir d'un moteur thermique, générateur de pollution susceptible de dégrader la vendange.

Conformément à une autre caractéristique de l'invention, ce bac est équipé, au niveau de sa paroi située à l'extrémité aval du tapis sans fin, d'une porte abattante articulée autour de son bord supérieur, des moyens étant prévus pour réaliser un mouvement de pivotement de cette porte et son maintien en position d'ouverture avec l'angle souhaité.

Les moyens de commande du mouvement de la porte sont constitués par un système à engrenages entraîné par manuellement par un volant ou une manivelle, ou encore par un moteur électrique. Il est également possible d'envisager des moyens de manoeuvre constitués par un dispositif mécanique à vis sans fin, ou par un dispositif électrique avec moteur électrique tubulaire.

En position de fermeture, cette porte vient en appui contre un joint d'étanchéité, un dispositif de verrouillage manuel assurant la sécurité d'obturation en période de transport.

Avantageusement, ce bac de réception comporte une face supérieure obturable avec étanchéité par au moins une porte. Il peut s'agir de portes abattantes, maintenues normalement en position ouverte par des vérins à gaz. Cet agencement permet si la vendange doit être conservée pendant un certain temps dans le bac, d'éviter toute oxydation de celle-ci, après fermeture des portes et introduction d'un gaz neutre, tel que de l'azote, dans l'espace situé au-dessus de la vendange.

De toute façon, l'invention sera bien comprise à l'aide de la description qui suit, en référence au dessin schématique annexé, représentant à titre d'exemple non limitatif, une forme d'exécution de ce bac monté sur une remorque :
Figure 1 est une vue en perspective, partiellement arrachée, de cette remorque ;
Figure 2 en est une vue en coupe longitudinale, par un plan vertical ;
Figure 3 en est une vue de dessus, partiellement en coupe.

La remorque selon l'invention comporte un bac, désigné par la référence générale 1, monté sur des roues 2 et muni d'un timon de remorquage 3. Le bac 1 possède la forme d'une trémie allongée dont le fond est occupé par un convoyeur horizontal à tapis sans fin 4, passant sur deux tambours 5 et 6 d'axe horizontaux, et étant soutenu par des rouleaux fous 7, le tambour 5 situé à l'extrémité du tapis opposée à celle située du côté du timon 3, étant entraîné en rotation par l'intermédiaire d'un moteur électrique 8, associé a un réducteur 9, avec un renvoi d'angle à 90°. Le tambour 5 est entraîné dans le sens des aiguilles d'une montre afin que la vendange soit déplacée vers l'extrémité de la cuve opposée à celle située du côté du timon.

Afin de favoriser l'entraînement de la vendange, la bande sans fin constitutive du convoyeur est équipée de taquets transversaux 10 régulièrement répartis. La paroi de la cuve 1 située à l'extrémité aval du convoyeur est équipée d'une porte abattante 11 articulée autour d'un axe 12 situé au niveau de son bord supérieur. L'étanchéité en position de fermeture est obtenue par l'intermédiaire d'un joint 13, situé du côté de la cuve. Dans la forme d'exécution représentée au dessin, la porte 11 est actionnable vers sa position d'ouverture à l'aide d'une manivelle 14 actionnant un mécanisme à engrenages, non représenté au dessin.

Ce mécanisme permet d'ouvrir la porte 11 et de maintenir celle-ci dans la position angulaire choisie pour le type d'évacuation de vendange considéré.

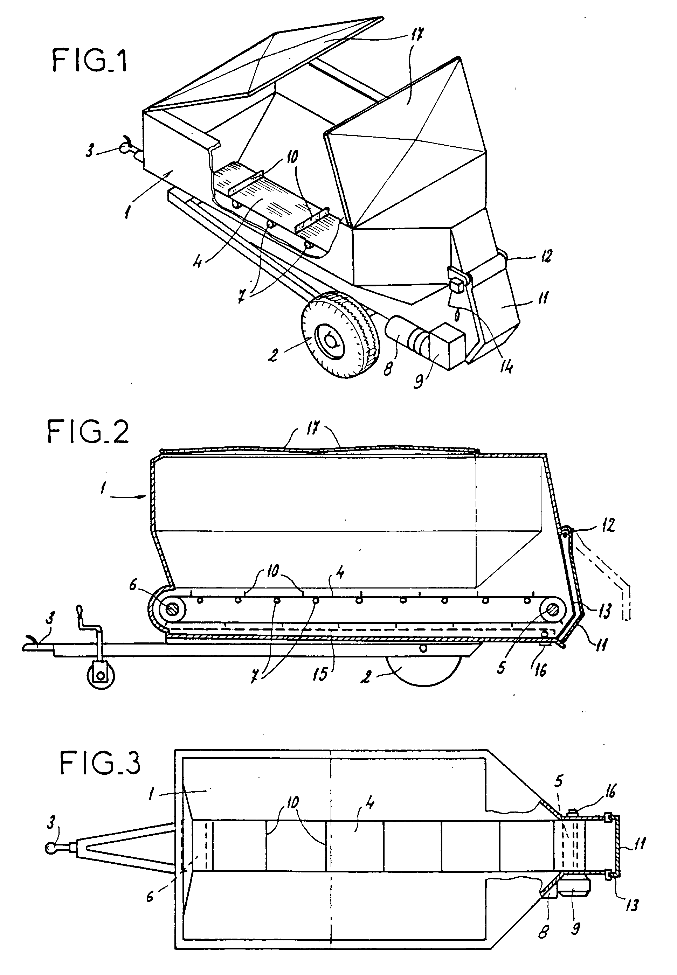

Comme cela ressort notamment de la figure 2, en-dessous du convoyeur 4 est disposée une grille 15 parallèle au fond, cette grille 15 étant destinée à retenir les grappes de raisin pouvant se glisser le long du convoyeur, tout en permettant le passage du jus. Ce jus peut être évacué grâce à une pente du fond de la cuve par une ouverture ménagée dans celui-ci, à laquelle est associée une vanne 16.

Enfin, le bac est équipé au niveau de son bord supérieur de deux portes abattantes 17, maintenues normalement en position d'ouverture par des vérins à gaz et susceptibles d'être maintenues fermées par des moyens mécaniques. En position fermée ces portes isolent la vendange du milieu extérieur.

Comme il ressort de ce qui précède, l'invention apporte une grande amélioration à la technique existante, en fournissant un bac de conception simple assurant l'évacuation de vendange sans aucun dommage pour cette dernière et sans risque pour les opérateurs.

Comme il va de soi, l'invention ne se limite pas à la seule forme d'exécution de ce bac décrite ci-dessus à titre d'exemple. C'est ainsi, notamment, que ce bac pourrait être monté de façon amovible sur une remorque, ou encore que les moyens de manoeuvre de la porte arrière pourraient être différents et par exemple commandés électriquement sans que l'on sorte pour autant du cadre de l'invention.

## Revendications

1. Bac de réception et d'évacuation pour le raisin de vendange, comportant un dispositif d'évacuation du raisin placé dans le fond de ce bac, constitué par un tapis sans fin disposé longitudinalement au-dessus du fond du bac, parallèlement à celui-ci et dont les tambours de guidage possèdent des axes horizon taux, caractérisé en ce que le bac (1) se présente sous la forme d'une trémie allongée, en ce que le tapis est équipé sur sa face extérieure de taquets transversaux (10) régulièrement répartis, et en ce que le fond du bac est équipé en-dessous du tapis sans fin (4) d'une grille (15) formant un fond filtrant, la grille retenant les grappes ayant pu passer le long du tapis sans fin, tout en permettant l'écoulement du jus, dont la récupération est réalisée à l'aide d'une vanne (16) obturant un orifice débouchant dans le fond du bac.

2. Bac selon la revendication 1, caractérisé en ce que l'entraînement du tapis sans fin (4) est assuré par un moteur électrique (8) associé à un réducteur (9) et un variateur de vitesse.

3. Bac selon l'une quelconque des revendications 1 et 2, caractérisé en ce qu'il est équipé, au niveau de sa paroi située à l'extrémité aval du tapis sans fin (4), d'une porte abattante (11) articulée autour de son bord supérieur, des moyens étant prévus pour réaliser un mouvement de pivotement de cette porte et son maintien en position d'ouverture avec l'angle souhaité.

4. Bac selon la revendication 3, caractérisé en ce que les moyens de commande du mouvement de la porte (11) sont constitués par un système à engrenages entraîné manuellement par un volant ou une manivelle (14), ou encore par un moteur électrique.

5. Bac selon la revendication 3, caractérisé en ce que les moyens de commande du mouvement de la porte comprennent un dispositif à vis sans fin.

6. Bac selon l'une quelconque des revendications 1 à 5, caractérisé en ce qu'il comporte une face supérieure obturable avec étanchéité par au moins une porte (17).

## Claims

1. A container for receiving and discharging harvested grapes, including a device for discharging grapes located in the bottom of the container, constituted by an endless belt disposed longitudinally above the bottom of the container parallel to the latter, and of which the guide rollers have horizontal axes, characterised in that the container (1) is in the form of an elongate hopper, in that the belt is provided on its external face with transverse regularly distributed projecting bars (10), and in that the bottom of the container is provided, beneath the endless belt (4), with a grill (15) forming a filtering base, the grill retaining the grape clusters which have been able to pass along the endless belt, whilst permitting the flow of juice, of which the collection is effected by means of a valve (16) closing an orifice opening in the bottom of the container.

2. A container according to Claim 1, characterised in that the drive of the endless belt (4) is effected by an electric motor (8) associated with a reducer (9) and a speed variation device.

3. A container according to either of Claims 1 and 2, characterised in that it is provided, at the level of its wall situated at the forward end of the endless belt (4) with a trap door (11) hinged about its upper edge, means being provided to effect a pivotal movement of this door and to hold it in an open position at a desired angle.

4. A container according to Claim 3, characterised in that the movement control means for the door (11) are constituted by a geared system driven manually by a wheel or handle (14), or by an electric motor.

5. A container according to Claim 3, characterised in that the movement control means of the door includes a worm device.

6. A container according to any one of Claims 1 to 5, characterised in that it includes an upper face which is closable in sealed manner by at least one door (17).

## Patentansprüche

1. Behälter zum Aufnehmen und zum Entleeren von Weinlese-Weintrauben, umfassend eine in dem Boden dieses Behälters angeordnete Weintraubenentleervorrichtung, welche von einem Endlosband gebildet ist, das oberhalb des Bodens des Behälters parallel zu diesem in Längsrichtung angeordnet ist und dessen Führungsrollen horizontale Achsen aufweisen, dadurch gekennzeichnet, daß der Behälter (1) die Gestalt eines länglichen Trichters aufweist, daß das Band an seiner Oberseite mit gleichmäßig verteilten Quermitnehmern (10) ausgestattet ist und daß der Boden des Behälters unterhalb des Endlosbands (4) einen Rost (15) aufweist, welcher einen filternden Boden bildet, wobei der Rost die Trauben zurückhält, welche längs des Endlosbands mitlaufen konnten, und dabei den Abfluß des Safts ermöglicht, dessen Wiedergewinnung mittels eines Ventils (16) ermöglicht ist, welches eine Öffnung in dem Boden des Behälters versperrt.

2. Behälter nach Anspruch 1, dadurch gekennzeichnet, daß der Antrieb des Endlosbands (4) durch einen Elektromotor (8) gewährleistet ist, welchem ein Untersetzungsgetriebe (9) und ein Geschwindigkeitsregler zugeordnet sind.

3. Behälter nach einem der Ansprüche 1 und 2, dadurch gekennzeichnet, daß er in Höhe seiner an dem in Förderrichtung gelegenen Ende des Endlosbands (4) angeordneten Wandung mit einer an ihrem oberen Rand angelenkten Kipptür (11) ausgestattet ist, wobei Mittel vorgesehen sind, um eine Schwenkbewegung dieser Tür und ihr Halten in Öffnungsstellung mit dem gewünschten Winkel zu ermöglichen.

4. Behälter nach Anspruch 3, dadurch gekennzeichnet, daß die Mittel zum Steuern der Bewegung der Tür (11) von einem Zahnradsystem gebildet sind, welches manuell von einem Rad oder einer Kurbel (14) oder auch von einem Elektromotor angetrieben ist.

5. Behälter nach Anspruch 3, dadurch gekennzeichnet, daß die Mittel zum Steuern der Bewegung der Tür eine Schneckenvorrichtung umfassen.

6. Behälter nach einem der Ansprüche 1 bis 5, dadurch gekennzeichnet, daß er eine durch wenigstens eine Tür (17) dicht verschließbare obere Seite umfaßt.
